# EUROPEAN PATENT SPECIFICATION

(11) **EP 0 617 711 B1**
(45) Date of publication and mention of the grant of the patent: **29.01.1997**
(21) Application number: 92925103.1
(22) Date of filing: 06.11.1992
(51) Int. Cl.: C08G 18/67, C08J 5/18, C09J 7/02, C09J 175/14

(54) **A HALOGEN-FREE ACRYLIC URETHANE SHEET MATERIAL**
EIN HALOGENFREIES ACRYL-URETHAN-FOLIENMATERIAL
MATERIAU EN FEUILLE A BASE D'URETHANE ACRYLIQUE, DEPOURVU D'HALOGENE

(30) Priority: 18.12.1991 DE 4141914
(43) Date of publication of application: 05.10.1994
(73) Proprietor: MINNESOTA MINING AND MANUFACTURING COMPANY, St. Paul, Minnesota 55133-3427 (US)
(72) Inventor: GOEB, Siegfried, D-4156 Willich 3 (DE); MAASSEN, Iris, D-4156 Willich 3 (DE)
(74) Representative: Wilhelm, Stefan
(86) International application number: US9209573
(87) International publication number: WO9312155

(56) References cited:
- DE-A- 3 915 981
- US-A- 3 700 643
- US-A- 4 271 223
- US-A- 4 808 471
- Dialog Information Services, File 351, World Patent Index 81-93, Dialog accession no. 008295505, WPI accession no. 90-182506/24, NITTO DENKO CORP, "Heat-resistant, display material - comprises plural laminar non-rigid base material composed of base and marking layer contg. colourant"
- Chemical Abstracts 113 (18), 1990, 153 979c & JP-A-02 120 042

## Description

The invention is related to a halogen-free acrylic urethane sheet material which is markable with conventional as well as radiation methods. Furthermore, the invention is related to a process for preparing this halogen-free acrylic urethane sheet material as well as single or multilayer halogen-free acrylic urethane sheet materials and label stocks.

Polymeric films such as plasticized polyvinyl chloride have been used for many years as backings for adhesive labels, tapes and decorative sheets. Polymeric films have had wide acceptance for such applications because, among other things, they are inexpensive and weather resistant and can be colored easily with pigments and dyes. In addition, plasticized polyvinyl chloride has had particularly wide acceptance because its properties can be modified over a wide range by incorporation of plasticizers.

Recently, however, halogen-containing materials in general have been recognized as producing undesirable by-products when burned. The gases given off are corrosive, present a health risk and have been implicated in destruction of the atmospheric ozone layer.

Specifically, plasticized polyvinyl chloride has an additional drawback when used as a backing for adhesive coated sheet material or tapes. Problems are often encountered with migration of the plasticizer into the adhesive coating. The adhesive properties are altered or destroyed as the plasticizer migrates from the polyvinyl chloride into the adhesive coating. Plasticizers are also known to evaporate with time or at elevated temperatures, thereby producing an unacceptably brittle film.

Thus, there exists a need for a polymeric backing which has the physical properties and advantages of plasticized polyvinyl chloride, but does not contain halogen atoms or other moieties which produce noxious by-products upon incineration and which are even more resistant to the effects of aging, chemicals, high temperatures and natural weathering.

US 4,271,223, Lambert, discloses a plastic film label stock to which ordinary printing inks adhere strongly without any surface treatment of the plastic backing so that the printing on the labels is highly resistant to abrasion. The plastic film which is used for the label stock comprises a polymer of an addition-polymerizable urethane oligomer. The urethane oligomer is based on oligomeric alcohols which can include polyester polyols, polyether polyols, polyacrylate polyols, polyolefin polyols and polysiloxane polyols. The oligomeric alcohols must have a glass transition temperature (Tg) of below 23°C. The polymerizable urethane oligomer is preferably mixed with a multifunctional acrylate cross-linking agent and cured by photopolymerization induced by UV-radiation.

Grunzinger discloses in US 4,808,471 a top coat of a retroreflective sheeting which is made of a mixture of hydroxy-functional acrylic polyols and a curing agent which is an aliphatic polyfunctional isocyanate such as the biuret of 1,6-hexamethylene diisocyanate. The retroreflective sheeting may have a dual-layer top coat, the outer layer being relatively hard to provide good resistance to solvents, abrasion and weathering, and the inner layer being softer to make the sheeting more conformable. Preferred starting materials for the hydroxy-functional acrylic polyol are esters of methacrylic acid, an acrylic acid ester having at least 4 carbon atoms in its ester group and a hydroxy-functional acrylate or methacrylate. These should be selected in such a manner that the polyol has a glass transition temperature Tg of from -20°C to 30°C. The outer layer consists of a polymer with a Tg of 0°C to 30°C whereas the inner layer shows a Tg of -20°C to 0°C.

Various self-adhesive markable materials in the form of self-adhesive sheets or films have been known, which may be marked, for example, by means of a laser beam. Such markable materials are predominately used in the commercial sector. Laser-markable adhesive labels containing PVC are mostly used, for example in 3M Scotchcal 100 Laser Script. The top layer is partially removed by means of the laser beam and then the bottom layer of a different color is exposed to form an image. Upon this type of marking corrosive gases may be formed, inter alia due to the vaporization of the top layer.

The German utility model G 81 30 861 discloses a multilayer label consisting of two layers of lacquer. These layers of lacquer consist of e. g. polyurethane crosslinked by radiation. A preferred lacquer consists of a mixture of hexanediol bisacrylate and a commercially available polyurethane acrylate which is composed of a long-chain polyester diol, an aliphatic diisocyanate and terminal acrylic moieties. The mixture is cured by an electron beam.

Laser markable labels of this kind are obtainable under the trade name TESA 6930 (Company Beiersdorf). The backing of these labels requires radiation curing which is a costly and critical process. By this process the possibility of adjusting mechanical properties is limited. Consequently the labels show little flexibility and do not conform to irregular surfaces.

Also commercially available are laser-markable adhesive labels of the company W.H. Brady Company, Milwaukee, USA. These labels are predominately made of biaxially orientated polyesters. These labels shrink when exposed to high temperature and are not tamper-proof. These adhesive labels consist of a top layer and a bottom layer, both of which have been dyed in different colors.

In Chemical Abstracts 113 (18), 153979c (JP-A-90 120042) there have been described heat-resistant self-adhesive (pressure-sensitive) films which are used as laser-markable labels. To this end 3,3'4,4'-biphenyltetracarboxylic acid anhydride 3,3'-thiodianiline polyamino acid is mixed with carbon black, dried and treated at 180°C for 60 minutes and then at 250°C for six hours. one surface of the resulting layer was coated with a titanium dioxide containing a solution of said compound and the layer was also treated at an elevated temperature. The reverse surface of the layer was provided with a silicone-based pressure-sensitive adhesive. Upon the evaporation of this polymer in a laser beam there may also occur corrosive conversion products such as SO₂

Nagafushi, in US 4,772,512, discloses a composite film for bar code labels comprising first and second heat resisting non-water-absorbing synthetic resin films. On the first film of the composite film, bar codes can be reproduced by means of a high speed dry process electro-static copier. As the first and second heat resisting, non-water-absorbing synthetic resin films in the composite film polyester films, polyimido films, polycarbonate films, cellulose ester films and polyamide films are used. This reference is silent with respect to a halogen-free acrylic urethane sheet material being radiation markable.

The most commonly used PVC-containing plastic film sheet materials of the prior art are disadvantageous because they contain plasticizers. If this materials are used for self-adhesive labels, plasticizers move into the adhesive layer and destroy the adhesive properties of the adhesive layer. This may result in a destruction of the adhesive layer and the label falls off. On the other hand, the loss of plasticizers in the PVC layer leads to altered mechanical properties of the PVC layer. Thus, this layer may become brittle and disintegrated. The PVC containing labels can also be marked either by radiation marking methods or by conventional printing methods, e. g. by ink. Furthermore, these plastic film sheet materials often do not have the necessary mechanical properties such as handlability or diecuttability or do not show sufficient heat-resistance, weathering stability or solvent resistance.

The halogen-free labels of the prior art show the above mentioned drawbacks, e. g. little flexibility restricting their use. A further drawback of the radiation curable label is the costly establishing of special equipment for the electron beam or UV curing.

It is an object of the present invention to provide halogen-free sheet materials for various purposes e. g. markable halogen-free sheet materials, multilayer markable sheet materials or label stocks which are markable by conventional printing methods as well as radiation marking methods. Another object of the invention is to provide halogen-free sheet materials as mentioned before, which show excellent mechanical properties and resistance to severe environmental stress like heat, solvents or weathering. These halogen-free sheet materials must still have the same application spectrum as the PVC containing plastic film sheet like color matching, cutting properties, adjustability of softness but also should avoid their drawbacks. Especially the sheet materials must have environmental compatibility and migration of plasticizer into the pressure sensitive adhesive must not occur. Yet another object of the invention is to provide a sheet material for manufacturing die-cuttable label stocks as well as decorative sheet materials.

Still another object of the invention is to provide a process for manufacturing sheet materials which does not require high temperature or high energy radiation curing. In particular the sheet materials should be manufacturable in a continuous process.

The sheet material of the invention is a halogen-free acrylic urethane sheet comprising a polymer comprising components A, B and C wherein
component A comprises a copolymer of
   (i) a monoester of acrylic or methacrylic acid and an aliphatic diol having 2 to 8 carbon atoms and
   (ii) an ester of acrylic or methacrylic acid and an aliphatic alcohol having 1 to 8 carbon atoms, and optionally a vinyl aromatic monomer as well as, optionally, N-vinylpyrrolidone or N-vinylcaprolactame, said component A having a Tg of 30°C to 100°C,
component B comprising an aliphatic polyester diol with a weight-average molecular weight less than 20,000 and
component C comprising a polyfunctional isocyanide or blocked polyfunctional isocyanide.

Preferably, the sub-component (i) consists of a monoester of acrylic or methacrylic acid and an aliphatic diol having 2 to 4 carbon atoms. Sub-component (ii) consists preferably of an ester of acrylic or methacrylic acid and an aliphatic alcohol having 1 to 4 carbon atoms.

Examples of suitable monoesters of acrylic or methacrylic acids and aliphatic diols forming sub-component (i) of component A of the polymer of the invention are 2-hydroxyethyl acrylate, 2-hydroxy-1-methylethyl acrylate, 2-hydroxypropyl acrylate, 3-hydroxypropyl acrylate, 2-hydroxybutyl acrylate, 4-hydroxybutyl acrylate, 2-hydroxyethyl methacrylate, 2-hydroxy-1-methylethyl methacrylate, 2-hydroxypropyl methacrylate, 3-hydroxypropyl acrylate, 2-hydroxybutyl methacrylate and the like.

Typically, the monoesters of acrylic or methacrylic acid and aliphatic diols forming sub-component (i) of component A are present in amounts of 5 to 50% by weight and subcomponent (ii) 50 to 95% by weight of the total amounts of monomers (i) and (ii) used for the copolymer of component A.

Examples of suitable esters of acrylic or methacrylic acids and the aliphatic alcohol having 1 to 8 carbon atoms are methyl acrylate, ethyl acrylate, propyl acrylate, isopropyl acrylate, butyl acrylate, isobutyl acrylate, hexyl acrylate, 2-ethylhexylacrylate, cyclohexyl acrylate, methyl methacrylate, ethyl methacrylate, propyl methacrylate, isopropyl methacrylate, butyl methacrylate, isobutyl methacrylate, hexyl methacrylate, 2-ethylhexyl methacrylate, cyclohexyl methacrylate and the like.

According to the invention it is also possible to add halogen-free vinylaromatic monomers to the alkylacrylates or methacrylates of the foregoing paragraph. Preferred is styrene or low alkyl substituted styrene such as α-methylstyrene. The aromatic system of the styrene can be substituted by low alkyl substituents which can be in o, p, m, position to the vinylic moiety. Besides the vinylaromatic monomers as mentioned N-vinylpyrrolidone and N-vinylcaprolactame may be used for substituting the monomers of subcomponent (ii). The vinylaromatic monomers can replace the monomer of sub-component (ii) up to 70% by weight based on the amount of sub-component (ii) present at maximum. The ester of acrylic acid or methacrylic acid and an aliphatic alcohol having 1 to 8 carbon atoms can be substitued by styrene derivatives, N-vinylpyrrolidone or N-vinylcaprolactame or combinations thereof up to 70% by weight.

According to the invention it is necessary to provide a glass transition temperature (Tg) for component A of 30°C to 100°C. If the Tg of component A is lower than 30°C the entire

composition consisting of component A, B and C becomes too soft to be used for manufacturing the sheet material of the invention. If the Tg is higher than 100°C the composition of A, B and C becomes too brittle. Component A comprising the sub-components (i) and (ii) is present in amounts of from 15 to 80% by weight of total amount of the polymer comprising components A, B and C, preferably in amounts of from 30 to 60% by weight.

The weight-average molecular weight of component A consisting essentially of the subcomponents (i) and (ii) is preferably in the range of 1,000 to 500,000 measured by gel permeation chromatographic (GPC).

Component B of the composition of the invention comprises an aliphatic polyester diol branched or non-branched with a weight-average molecular weight less than 20,000. The polyester diol of the component B of the composition of the invention can generally be formed by the esterification of a polyol with a polycarboxylic acid or an acid anhydride. The aliphatic polyester diol conventionally employed in making the polyester diols include alkylene glycols, such as ethylene glycol, propylene glycol, butylene glycol and neopentyl glycol and other glycols such as cyclohexane dimethanol, caprolactonediol reaction products and similar type compounds.

Suitable carboxylic acids used in the reaction with the above-described polyols include adipic acid, sebacic acid, glutaric acid, chlorendic acid. The weight-average molecular weight of the aliphatic polyesterdiol is preferably less than 10,000. The preferred polyesterdiol component B of the present invention is poly-epsilon-caprolactonediol having a weight-average molecular weight of 500 to 10,000. Component B is present in the polymer comprising the components A, B and C of the invention in amounts of from 5 to 50% by weight, preferably 15 to 30% by weight based on total amount of the polymer comprising the components A, B and C.

Component C comprises a polyfunctional isocyanide. Preferred isocyanates are aliphatic diisocyanates with an alkyl bridge between the isocyanide groups of 4 to 8 carbon atoms. These alkyl moieties may be branched or unbranched. Particularly preferred is 1,6-hexamethylenediisocyanate.

Also blocked polyfunctional isocyanates are suitable. The isocyanide moiety is transformed with suitable blocking agents into another moiety which can be regarded as a latent isocyanide group. Suitable blocking agents are those materials that unblock, for example, at elevated temperatures, thus generating again the isocyanide group. Suitable blocking agents are for example low aliphatic alcohols and oximes such as methylethylacetoneoxim or lactames such as caprolactame. Suitable blocked polyfunctional isocyanates include monomeric polyisocyanates, such as 4,4'-methylene bis-cyclohexyl isocyanide and isophorone diisocyanate. A particularly preferred blocked polyisocyanate is the methylethylketoxime blocked isocyanurate of hexamethylene diisocyanate. Also dimers or trimers of the diisocyanate are suitable. Also biurets of the isocyanates can be used. A preferred blocked polyfunctional isocyanide according to the invention is an adduct of 1,6-hexamethylene diisocyanate and 2-butanone oxime.

Component C is present in amounts of from 15 to 50% by weight preferably 20 to 45% by weight based on total amount of polymer composed of the component A, B and C.

Coloring agents (component D) such as inorganic or organic pigments and/or dyes can be used in the composition of the invention for coloring the sheet material of the invention. For generating a black color, carbon black paste is suitable as it is sold under the trade name Tack 1 (Degussa, Frankfurt, Germany). As a white colored pigment, titanium dioxide in silane modified form can be used (Kronos CL 310, Kronos Titan, Leverkusen, Germany). Also aluminum particles of 5 µm length in a solvent (STAPA-Off-Set 3000, Eckhart-Werke, Fürth, Germany) can be used. Other coloring pigments are C.I. pigment red 178/71155 (Paliogen rot L3910 HD, BASF, Ludwigehafen, Germany), C.I. pigment yellow 110 (Irgazin gelb 3RLT-N, Ciba-Geigy, Marienberg, Germany) as well as C.I. pigment blue 1511, Heliogen blau K6911D, BASF, Ludwigshafen, Germany).

The coloring agents (component D) are present in amounts of from 0.5 phr (parts per hundred resin) up to 100 phr based on total amount of the polymer composed of the components A, B and C.

Optionally, levelling agents (component E) may be added to the composition of the present invention. The levelling agents support the formation of a uniform and smooth surface without surface defects. Suitable levelling agents are generally organo silicones and fluorochemicals. For example, polyether modified methylpolysiloxane (commercially available under the tradename Baysilon OL17, Bayer Leverkusen) can be used as levelling agent. Particularly preferred is the commercially available product 3M Fluorad® FC 430. The levelling agent can be present in amounts of from 0.1 to 1.0 parts per hundred based on hundred parts polymer composition comprising A, B and C.

Optionally thickeners (component F) may also be added to the composition of the present invention. An example for suitable thickeners according to the invention is hydrophobic fumed silica such as Aerosil® R974 (Degussa, Frankfurt, Germany). The thickeners F can be present in amounts of from 1 to 10 phr based on hundred parts polymer composition comprising A, B and C.

As catalysts (component G) according to the invention there may be used those which in general promote urethane chemistry such as tin salts of organic acids. Preferred are dibutyltin dilaurate and tin octanoate. The tin catalysts may also be used with alkyl amines as cocatalysts. Useful cocatalysts include tetramethylbutanediamine (TMBDA) and 1,4-diaza[2.2.2]bicylooctane (DABCO) (Kunststoff Handbuch, Vol. 7, Polyurethane, Second Edition 1983, Karl Hanser Verlag (München, Wien)).

The skilled person understands that for adjusting characteristic properties of the halogen-free acrylic urethane sheet material of the invention and for economic reasons fillers may be added e. g. mica, calcium carbonate kaolin.

The halogen-free acrylic urethane sheet material of the invention can be prepared by the following process.

The acrylic polyol used in the present composition can be prepared by conventional free radical initiated polymerization processes in which monomers are blended with solvent, polymerization catalyst and, optionally, a chain transfer agent. The mixture is heated to 60 to 100°C for 4 to 8 hours.

0.1 to 5 percent by weight based on the weight of monomers of a polymerization catalyst initiator is used to prepare the acrylic polyols. Suitable polymerization initiators include organic peroxides such as di-t-butyl peroxide and azo catalysts such as 2,2'-azobisisobutyronitrile.

Alternatively, the preparation of component A can also take place as an emulsion. The monomers, along with a suitable polymerization initiator, are dispersed in water using surfactants. The thermal polymerization is conducted by heating the emulsion until the polymerization is substantially complete. The resulting polymer A is then separated from the aqueous polymerization medium by precipitation or stripping techniques. The resulting polymer A can then be dissolved in organic solvent, producing a polymer solution similar in overall composition to that obtained in the organic solution polymerization described previously.

Component A is then mixed with component B as well as optional components such as coloring agents like pigments or dyes (component D), levelling agents (component E) and thickeners (component F). The cross-linking agent (component C) and optionally catalyst (component G) are preferably added to the mixture of A and B directly before the coating operations so that premature cross-linking reaction does not occur.

The sheet of the current invention is cast from organic solvent onto a removable support. The term removable support means an intermediate carrier. The removable support must have release properties and can be used also for surface modifying of the sheet which is cast onto the removable support. The releasing properties are essential for easy and complete removing of the sheets of the invention. The removable support should not be removed before the films arranged on the support are self-supporting during further processing. In order to impart a matt surface to the thin layer to be applied onto the removable support, a support with a rough surface is chosen, preferably Stripkote BOR Supermatte from S. D. Warren Company of Bornhem, Belgium.

Preferably the composition for manufacturing the sheets of the invention are arranged on the removable support by screen-printing or knife coating depending on the desired thickeners of the layer.

The sheet material of the invention is a sheet-shaped thin plastic film material and comprises the composition of the invention. The sheet material can be marked with conventional printing methods or radiation methods or combinations thereof. If radiation methods are used, a laser-marking method is preferred. A non-pigmented, clear monolayer sheet material can be prepared as described above by casting the composition of the invention onto the removable support for example with a knife-coater. This monolayer film is dried at elevated temperatures (80 to 100°C) for several minutes and then at higher temperature, preferably 80 to 200°C for some minutes in order to cure the mixture completely. This film is printable with conventional methods and also laser-markable. It is also possible to prepare a single pigmented layer which can be printed by conventional means and/or marked using a laser beam and the like.

If the halogen-free acrylic urethane sheet material of the invention is used as a laser-markable sheet material no primer or special treatment is necessary for the surface to be printed. However, if the label is intended for conventional printing methods, priming of the surface is preferred to promote adhesion of the inks to the upper surface to be printed. The priming may be performed by physical or chemical methods. As a physical method, corona discharge treatment is preferred. The chemical priming is a preferred method when the halogen-free acrylic urethane sheet material of the invention is provided with an adhesive on the side opposite to the one which will be marked. A chemical primer is preferably a diluted solution of an acrylate polymer or diluted adhesive.

Figure 1 shows schematically the halogen-free acrylic urethane sheet material of the invention as a single sheet 10 embodiment.

Figure 2 shows a bilayer structure of the halogen-free acrylic urethane sheet material of the invention. The contrasting layers 10 and 20 are firmly bonded to each other.

Figure 3 shows schematically a three layer structure of the halogen-free acrylic urethane sheet material of the invention. The third layer 30 is preferably thicker than layers 10 and 20 which can be of the same or slightly different thickness. The layer 20 is firmly bonded to layers 10 and 30.

Figure 4 shows another preferred embodiment of the sheet material of the invention as described in Figure 1. On one side of layer 10 there is arranged a layer 40 of a pressure-sensitive adhesive or heat-activatable adhesive. Preferably a protective sheet 50 covers the surface of the adhesive layer 40 opposite to the surface which is bonded to layer 30.

Figure 5 shows schematically an arrangement of the adhesive layer 40 and the protective sheet 50 with the bilayer structure of Figure 2.

Figure 6 shows schematically an arrangement of the adhesive layer 40 and the protective sheet 50 with the three layer structure of the sheet material of the invention as disclosed in Figure 3.

Figure 7 shows an image which has been created by radiation marking of a bilayer sheet material as disclosed in Figure 2. The layer 10 is black-colored and the layer 20 is of white color.

Figure 8 shows a cross-sectional view of the sheet material of Figure 7 along the line I --- I'. The first black layer is removed until the layer 20 (white) is reached or also some part of layer 20 might be removed, thus creating a readable character.

Figure 9 shows a two-color image which has been created by radiation marking of a 3-layer sheet material as disclosed in Figure 3. The layer 10 is of black color, layer 20 is of white color and layer 30 is of grey color.

The letter "P" is created by partially removing black layer 10, thus letter "P" appears in white color. The numeral "1" is created by partially removing black layer 10 and white layer 20, thus the color of layer 30 appears in grey color and renders the respective character readable in a different contrast or color to the letter "P" being white in color.

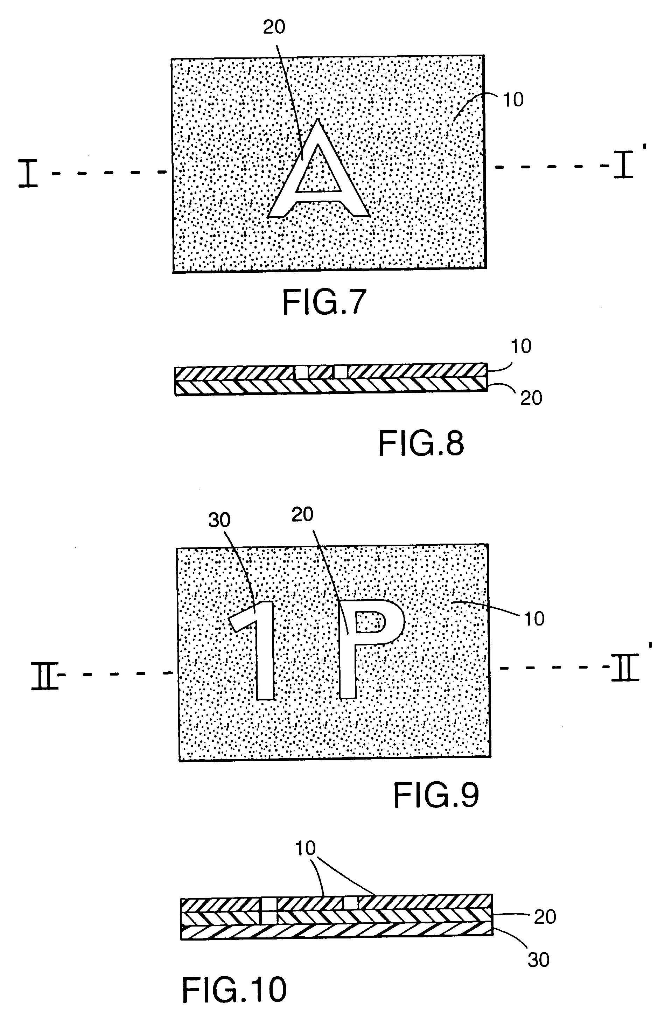

Figure 10 shows schematically a cross-sectional view along the line II --- II' of Figure 9. Figure 10 discloses the partially removed portion of layer 10 creating the letter "P" and the removing of layers 10 and 20 forming the numeral "1".

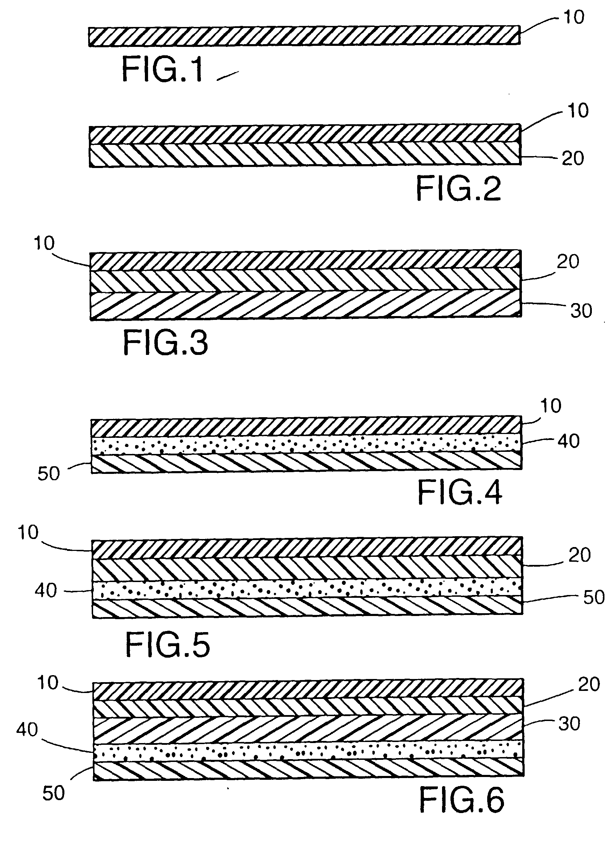

In a preferred embodiment of the invention the halogen-free acrylic urethane sheet consists of a single-layer sheet material 10 as shown in Figure 1. The sheet material 10 can be marked by radiation methods or by conventional printing methods. The layer can be burned away partially by radiation methods in order to create an image. The image itself can be rendered more easily visible by printing ink on the surface of the halogen-free acrylic urethane sheet material 10. However, it is also possible that the sheet material 10 is printed with ink and afterwards the image is constructed by radiation methods removing the layer in specific areas and thus creating an image. Preferably the sheet material is 20 to 200 µm in thickness.

In a further preferred embodiment of the invention a multilayer sheet material can be used for radiation marking or printing (Figures 2 to 6).

The preferred method for forming the multilayer sheet is by casting of successive layers from organic solution. Each layer is partially dried before casting of the next layer to promote adhesion between the layers of the multilayer sheet material. Casting from organic solution can be performed in a variety of ways. The solution may be laid down by means of screen-printing, spraying or more traditional coating methods such as knife coating. Combination of coating methods for organic solution may be used as well to form the multilayer sheet material.

The multilayer sheet of the invention can be prepared by a process wherein the individual layers are produced as films by coating or printing or by mono- or multilayer casting or by laminating prefabricated sheet materials of the invention or combinations of the process measures and priming the printable surface with corona discharged treatment if the sheet material is prepared for use in conventional printing methods. Further, the multilayer sheet material can be produced by spray-coating and/or screen-print-coating of the removable support with a thin reactive layer of a composition comprising the components A, B and C according the invention followed by drying for a short time to partially cure the first layer 1 of said mixture, coating onto the first layer 1 a second layer 2 of a mixture having a different color than the first layer, optionally repeating the previous step for producing a third layer 3, drying the layers to finally cure them, removing the multilayer sheet material from the support, providing one side of the multilayer sheet with a pressure-sensitive adhesive material onto a side which has been treated with a primer and applying a protective sheet 5 onto the pressure-sensitive adhesive layer 4.

Multiple layers may also be coextruded. Combination of extrusion and lamination may also be used to produce a three-layer multilayer sheet, for example.

In a preferred embodiment of the multilayer sheet material it comprises two layers (Figure 2). The two layers 10, 20 comprise the same ingredients as the single layer as described above. Preferably the two layers 10, 20 differ in color. Preferably the contrast between the first layer 10 and second layer 20 of the bilayer sheet material is due to that the layers 10, 20 are different in color or opacity.

For producing such layers 10, 20 the appropriate coloring agents such as pigments, dyes, fillers or metal powders, graphite, polymer fibers, glass fibers, waxes, mineral fillers, organic or inorganic hollow particle fillers in different mixtures are previously admixed with the respective materials that are intended to form the layers 10, 20 of the multilayer sheet materials. A

different coloration may be effected by adding organic and/or inorganic pigments as well as dyes. Thus, for example a black first layer 10 may be produced by adding carbon black to the polymer of the composition for manufacturing the layer. To provide a high contrast the second layer 20 may be dyed with a white pigment such as an inorganic pigment, for example titanium dioxide. When the black first layer is partially removed by the laser beam treatment, the white layer (second layer 20) is exposed so that an image appears.

It is preferred that the first layer 10 is white and is located on a colored second layer 20 or that the first layer 10 is colored and located on a black undersurface. Also preferred is a combination of a white thin first layer 10 and a second layer 20 dyed black. However, what is particularly preferred is a black thin first layer 10 on a white second layer 20 or silver metallic first thin layer 10 on a black second layer 20 or a black thin first layer 10 on a dyed second layer 20, for example red or yellow. The layer 10 is 2 to 25 µm, preferably 5 to 20 µm in thickness and the layer 20 is 30 to 100 µm, preferably 50 to 70 µm in thickness.

This bilayer sheet material as a representative example of the multilayer sheet material of the invention can also be marked by conventional printing methods as well as radiation methods or combinations thereof. It is advantageous to use such multilayer sheet materials as laser-markable labels because they have excellent mechanical properties, temperature resistance and weathering stability. Moreover, if these labels are marked with a laser beam no corrosive gases may come off the polymeric material because no halogen containing polymers are used.

A further preferred embodiment of the present invention is a multilayer halogen-free acrylic urethane sheet material consisting of three layers (figure 3).

This sheet material of the invention consists preferably of two relatively thin layers 10, 20 on top of a thicker layer 30. This construction can be used for laser-marking application where it is desirable to have an image in two colors. The two-color image is created by a two-step laser-marking process.

The laser beam is first focused at a shallow depth relative to the upper surface of the film resulting in vaporization of the top layer 10. The image appears in the color of the second layer 20 and contrasts with the color of the top layer 10. The beam is then focused at a deeper point relative to the surface of the film resulting in vaporization of both the top layer 10 and the underlying layer 20. The image appears in the color of the bottom layer or base layer 30 which contrasts as well with the color of the top layer 10.

The three-layer film can be produced by the following method. A thin layer 10 of the coating composition of the present invention is coated onto a removable support. The layer is partially dried. A second thin layer 20 is then coated over the first thin layer 10 and partially dried as well. Then a third thicker layer 30 is coated over the second layer 20. The three layer composite is then dried and cured completely.

Preferably, the thickness of layer 10 is 2 to 25 µm, preferably 5 to 20 µm, layer 20 is 2 to 25 µm, preferably 5 to 20 µm and of layer 30 is 30 to 100 µm, preferably 50 to 70 µm.

For example, the manufacturing of a three-layer sheet material of the invention is carried out by screenprinting a first thin layer 10 followed by drying and partial curing and then screen-printing a second thin layer 20 followed again by drying and partial curing and finally casting a third thicker layer 30 with a knife-coater followed by drying and complete curing of the multilayer film. The curing is preferably effected for a period of 0.5 to 10 minutes and preferably of 2 minutes, at a temperature from 150°C to 220°C. Drying and partial curing of the thin layer(s) is preferably carried out at a temperature of from 120°C to 220°C and particularly preferred of from 120°C to 150°C for a period from 1 to 5 minutes. The film, thus prepared, may be stripped from the removable support at this point.

The two layer halogen-free acrylic urethane sheet material of the invention is preferably prepared in a similar way as described above, however, by omitting the step regarding the layer 20.

For the layers of the sheet material of the invention, heating results in highly cross-linked layers which are solvent-resistant, heat-resistant, abrasion-resistant and non-weathering. The layers are intimately bonded to each other in the coating step before the curing reaction is completed.

In a preferred embodiment of the invention the multilayer sheet material is provided with an adhesive layer 40 (figures 4 to 6).

For making the adhesive layer 40, it is preferred to use pressure sensitive adhesives or heat-activatable adhesives. These may consist of polyacrylates, polyesters, polyolefins, polyamides, polyurethanes, silicone polymers, polybutadiene and copolymers, polyisoprenes and copolymers, natural and synthetic rubber as well as hydrogenated derivatives thereof with or without resins, fillers and cross-linking agents. Polyacrylates have also proven to be useful, particularly those which have been modified for use on a variety of surfaces having very different surface energies, such as steel/polyethylene.

Also for this kind of labels the pressure-sensitive adhesives which are particularly preferred are tackified isooctylacrylate and acrylic acid copolymers. The copolymers are preferably employed in amounts ranging from 50 to 70% and preferably in an amount of about 60% by weight. As the tackifying resin there is preferably used Foral 85 (company Hercules), a hydrogenated rosin or its glycerol or pentaerythritol esters in amounts of preferably 30 to 50% and particularly preferred of about 40% by weight. In the mixture of adhesive there are added usually antioxidants in amounts of about 1% and crosslinkers such as for example aziridine compounds.

Particularly preferred are acrylate based pressure-sensitive adhesive materials such as copolymers of isooctylacrylate and acrylic acid like those disclosed in US 2,884,126 (Re: 24,906). The adhesive layer 40 has a thickness of 10 to 100 µm, preferably 20 to 60µm.

The adhesive layer 40 can be protected by a protective sheet 50 (Figures 4 to 6).

The protective sheet 50 preferably is adhesive-repellant and more specifically consists of a paper or film which has been coated or modified with compounds of low surface energy relative to the above-identified adhesive. This purpose is served, preferably, by organo silicone compounds, fluoropolymers, polyurethanes and polyolefins. This protective sheet 50 consists of paper coated with adhesive repellant materials as mentioned above or a polymeric sheet produced from polyethylene, polypropylene, PVC, polyesters with or without the addition of adhesive-repellant compounds. Preferably, the protective sheet 50 has a thickness of 25 to 250 µm, preferably 80 to 120 µm.

In a preferred embodiment of the invention the sheet material has an adhesive layer 40 and optionally a protective sheet 50 forming a label stock. The label stock may be cut to form labels or may be left intact to be used as a larger self-adhesive decorative sheet.

The label stock of the present invention may also be formed by several methods. In multilayer sheet material intended for use as a laser-markable label stock, it is preferred that the upper layer 10 which is removed partially by the laser is thin to reduce the amount of material which must be burned away by the laser. This thin layer 10 must also be of relatively constant thickness so that the laser may be adjusted in its depth to burn through the layer consistently and completely and without excess expenditure of energy. The layers of the multilayer sheet material may be prepared individually by casting from organic solution or by extrusion techniques. The layers are then laminated together to form a multilayer sheet material.

The halogen-free acrylic urethane sheet material of the invention can be prepared by copolymerizing the sub-components (i) and (ii) of component A according to the invention in solution mixing the component A in solution with components B and C of the invention, optionally adding coloring agents, thickeners or leveling agents, casting the mixture on a removable support followed by thermal curing and priming one or both surfaces.

However, the sheet material should be treated to promote adhesion between the sheet material and the pressure sensitive adhesive layer. This treatment can be by application of a chemical primer or more preferably by corona discharge treatment. One method of forming the label stock of the present invention consists of applying the pressure sensitive adhesive layer directly onto the treated sheet material. This may be by casting from organic solution or aqueous dispersion or by such techniques as hot melt coating. Optionally, a protective sheet may be added to cover the pressure sensitive adhesive layer until exposure of the adhesive is desired.

A second method of forming the label stock of the present invention consists of applying the pressure sensitive adhesive layer directly to the protective sheet. The adhesive layer with protective sheet combination is then laminated to the sheet material, thus forming the same construction as produced by the direct application of adhesive to the sheet material described previously.

The sheet material according to the invention, preferably, has an elongation at break of from 5 to 100% and, thus, is highly flexible and die-cuttable. Another advantage of the sheet material according to the invention consists in that it does not require any treatment by irradiation.

In an especially advantageous manner the sheet material according to the invention may be employed with a transporting device for laser-marking as proposed in the German patent application P 40 27 938 which is preferably used in a laser marking equipment. The sheet materials according to the invention, preferably the multilayer sheet materials may be used as laser-markable adhesive labels, especially for a product characterization by means of bar codes. They are also suitable for the production of informatory signs or sign boards of any type.

The advantages of the sheet material according to the invention result in that the plastic film sheet material can be produced by screen-printing procedures and thermally cured to produce smooth uniform sheets free of defects. The sheet material is markable with conventional printing methods, e. g. screen-, flexographic, off-set-printing or other ink-printing methods, toner-printing, xerographic-, laser-printing, thermotransfer as well as needle-printing. Multilayer sheets are advantageous because the sheets comprise layers which are chemically bonded to each other. The individual layers are safely prevented from slipping relatively to each other and from separating. Furthermore, it is possible to provide a wide spectrum of color combinations. More particularly it is advantageous that the components of the plastics employed do not contain any toxic chemicals and upon marking with a laser beam preferably a Nd-YAG laser (1.064 nm) do not release any corrosive vapors. Furthermore, the properties of the film can be determined within definite ranges especially with respect to the excellent heat-resistance, solvent-resistance and abrasion-resistance.

The invention is further illustrated by the following nonlimiting examples.

### Examples A1 - A4

### Preparation of acrylate polyol (component A)

50 parts toluene and 50 parts butylacetate were charged to a reaction vessel equipped with a nitrogen purge, stirrer, thermometer and addition funnel. 2.5 parts di-t-butyl peroxide was added to the solvents at 60°C. 100 parts monomer mixture, of the composition described in table 1, was mixed with 2.5 parts azobisisobutyronitrile. The monomer mixture was added to the contents of the vessel with stirring in three equal portions: one portion initially, one portion after 1 hour and one portion after 2 hours. After the exotherm was complete, the reaction mixture was stirred at 60°C for 8 hours. Final solids content was 49 to 51 weight-%.

**TABLE 1**

| Component A Acrylate Polyol | | | | | | | | |
|---|---|---|---|---|---|---|---|---|
| | sub-component (i) | | sub-component (ii) | | | | | |
| No. | 2-HEMA | HPMA | MMA | EMA | BA | IBMA | Styrene | Tg |
| A1 | 16 | - | 55.0 | 17 | - | 12 | - | 82 |
| A2 | 40 | - | 22.5 | - | - | - | 37.5 | 78 |
| A3 | 20 | - | 50.0 | - | 30 | - | - | 30 |
| A4 | - | 20 | 50.0 | - | - | - | 30.0 | 94 |
| MMA = methyl methacrylate; EMA = ethyl methacrylate; BA = butyl acrylate; 2-HEMA = 2-hydroxyethyl acrylate; HPMA = hydroxypropyl methacrylate; IBMA = isobutyl methacrylate; Tg = glass transition temperature. | | | | | | | | |

Table 2A shows the weight-average molecular weight M_{w} the number-molecular weight Mₙ as well as the ratio M_{w}/Mₙ.

**TABLE 2A**

| No. | M_{w} | Mₙ | M_{w}/Mₙ |
|---|---|---|---|
| A1 | 20.101 | 10.213 | 1.97 |
| A2 | 167.539 | 53.421 | 3.14 |
| A3 | 196.963 | 60.623 | 3.25 |

Molecular weight characterization of acrylic polyol component A and polyester diol component B has been by conventional gel permeation chromatography (GPC).

Instrumentation consisting of a series of Perkin Elmer components was used for all determinations. A model 400 pump was used in conjunction with an ISS 100 Automatic sampler and an LC 25 differential refractive index detector. Temperature control for the columns was provided by a Spark Holland HPLC column thermostat. Three PL gel mixed bed columns with a particle size of 10 µm and a length of 30 cm were held at 40°C. The solvent used to perform the measurement was stabilized tetrahydrofuran at a flow rate of 1 ml/min. The sample to be tested was injected as a 0.2% solution. All samples were treated with diazomethane prior to chromatography.

Data was collected using a PL Separation Sciences GPC Data Station. Calibration for molecular weight was performed using a series of ten narrow distribution polystyrene standards ranging in molecular weight from 1,200 to 2,950,000. All molecular weights are polystyrene equivalent molecular weights.

The number-average molecular weight (Mₙ and weight average molecular weight (M_{w}) are well known mathematical descriptions of the molecular weight of a polymer sample. The polydispersity, abbreviated "P", is a measure of the distribution of molecular weight and is defined as M_{w}/Mₙ. Each of the foregoing is a well known term used by the skilled person.

### Preparation of coating mixtures

The solution of acrylate polyol (component A) as prepared above was mixed with a 50% by weight solution of aliphatic polyester diol (component B) in toluene. Optional components such as coloring agents (component D) and thickener (component F) were added, if present. The resulting mixture was rendered homogeneous by mixing on a ball mill for eight hours at room temperature.

Directly preceding the coating, blocked isocyanate (component C) was added as well as dibutyltindilaurate catalyst (component G) and the optional levelling agent (component E).

A list of the components B - E is given below.

### Aliphatic polyesterdiol (component B)

- B1:: Epsilon-caprolactonediol, available under the trade-name TONE™ 230 (Union Carbide, USA)
- B2:: Epsilon-caprolactonediol, available under the trade name TONE™ 260 (Union Carbide, USA)

Table 2B shows the weight-average molecular weight M_{w} the number-average molecular weight Mₙ as well as the ratio of M_{w}/Mₙ.

| No. | M_{w} | Mₙ | M_{w}/Mₙ |
|---|---|---|---|
| B1 | 3.614 | 2.727 | 1.33 |
| B2 | 8.266 | 5.311 | 1.56 |

- B3:: slightly branched polyester polyol, available under the trade name Desmophen® 670 (Bayer Leverkusen, Germany)
- B4:: linear polyesterdiol, available under the trade name oxyester Z 1326 (Hüls AG, Germany)

### Blocked polyfunctional diisocyanate (component C)

- C:: adduct of 1,6-hexamethylene diisocyanate and 2-butanone oxime available under the trade name Desmodur BL 3175 (Bayer Leverkusen, Germany)

### Coloring agents (component D)

- D1:: carbon black paste in soya alkyd resin available under the trade name Tack 1 (Degussa, Germany)
- D2:: titanium dioxide silane modified available under the trade name Kronos CL 310 (Kronos Titan, Germany)
- D3:: aluminum particles in solvent, 5 µm available under the trade name STAPA-Off-Set 3000 (Eckhart-Werke, Germany)
- D4:: C.I. Pigment red 178/71155 available under the trade name Paliogenrot L3910 HO (BASF, Germany)
- D5:: C.I. Pigment yellow 110 available under the tradename Irgazingelb 3RLT-N (Ciba-Geigy, Germany)
- D6:: C.I. Pigment blue 1511 available under the trade name Heliogen-Blau K6911D (BASF, Germany)

### Other additives (component E)

- E:: polyether modified methylpolysiloxane (levelling agent) available under the trade name Baysilon OL17 (Bayer Leverkusen, Germany)
- F:: Hydrophobic fumed silica (thickener) available under the trade name Aerosil R 974 (Degussa, Germany)
- G:: dibutyltindilaurate (catalyst) (Aldrich)

### Preparation of films

The films of the current invention were cast from organic solvent onto a removable support either by screen-printing or knife-coating, depending on the thickness and precision of the layer to be formed.

The removable support was a kraft paper coated with a synthetic acrylic resin. The support was obtained as Stripkote BOR, Supermatte from S. D. Warren Co. of Bornem, Belgium.

### Examples 1 to 14

### Monolayer films

A coating mixture with the composition described in table 3 was coated onto the removable support with a knife-coater at a wet thickness of 100 µm. Levelling agent was added to each of the compositions used in a single-layer film. The coating was dried at 80 to 100°C for two minutes and then at 195°C for 2.5 minutes using a forced-air oven.

**TABLE 3**

| Monolayer film | | | | | | | | | |
|---|---|---|---|---|---|---|---|---|---|
| Ex. No. | A-Type | wt.% | B-Type | wt.% | C | wt.% | Comp. | Dphr | color |
| 1 | A1 | 59 | B1 | 15 | C | 26 | D2 | 30.0 | white |
| 2 | A1 | 63 | B2 | 13 | C | 24 | D2 | 30.0 | white |
| 3 | A1 | 49 | B2 | 29 | C | 22 | D2 | 30.0 | white |
| 4 | A1 | 47 | B2 | 30 | C | 23 | D2 | 30.0 | white |
| 5 | A1 | 49 | B2 | 29 | C | 22 | - | - | transp. |
| 6 | A1 | 49 | B2 | 29 | C | 22 | D6 | 4.0 | blue |
| | | | | | | | D2 | 10.0 | white |
| 7 | A2 | 32 | B1 | 24 | C | 44 | D2 | 30.0 | white |
| 8 | A2 | 32 | B1 | 24 | C | 44 | - | - | transp. |
| 9 | A3 | 54 | B1 | 16 | C | 30 | D2 | 30.0 | white |
| 10 | A3 | 54 | B1 | 16 | C | 30 | D1 | 7.5 | black |
| 11 | A4 | 54 | B1 | 16 | C | 30 | D3 | 2.0 | silver |
| 12 | A4 | 54 | B1 | 16 | C | 30 | D6 | 4.0 | blue |
| | | | | | | | D2 | 10.0 | white |
| 13 | A1 | 31 | B3 | 34 | C | 35 | D2 | 30.0 | white |
| 14 | A1 | 30 | B4 | 37 | C | 33 | D2 | 30.0 | white |

The thickness of the Monolayer was 50 µm.
Amount of levelling agent was 0.08 phr.
Amount of catalyst dibutyltindilaurate was 0.2 phr.

This procedure is used to make a single layer of clear film to be used ultimately as a clear protective adhesive film which is printable by traditional means. It can also be used to prepare a single pigmented layer which is printable by conventional means.

### Examples 15 to 25

### Two layer sheet material

A coating mixture described under "first layer" in table 4 was coated onto the removable support using a flat bed screen printer with a 120 mesh screen to a wet thickness of 15 to 17 µm. The coating was dried at 80 to 100°C for one minute and partially cured at 195°C for about 90 seconds. The dry layer is about 10 µm in thickness.

A second thicker layer corresponding to the composition under "second layer" in table 4 was coated on top of the thin partially cured layer with a knife-coater in a wet thickness of 120 µm and then dried and cured under the conditions given above for monolayer film having a thickness of about 60 µm.

The two layers having a total thickness of about 70 µm are rendered recognizably different from each other by the presence or absence of pigments. The two layer sheets described are useful for laser-marking.

**TABLE 4**

| Two layer film | | | | | | | | | | | |
|---|---|---|---|---|---|---|---|---|---|---|---|
| Ex. No. | Layer | Thickness | A-Type | wt.% | B-Type | wt.% | C. | wt.% | D-Type | phr | color |
| 15 | first | 11 | A2 | 37.0 | B2 | 22.0 | C | 41.0 | D1 | 17.0 | black |
| | second | 60 | A2 | 37.0 | B2 | 22.0 | C | 41.0 | D2 | 30.0 | white |
| 16 | first | 12 | A1 | 54.0 | B2 | 23.5 | C | 22.5 | D1 | 17.0 | black |
| | second | 40 | A1 | 54.0 | B2 | 23.5 | C | 22.5 | D2 | 30.0 | white |
| 17 | first | 13 | A2 | 29.5 | B1 | 28.0 | C | 42.5 | D1 | 17.0 | black |
| | second | 50 | A2 | 29.5 | B1 | 28.0 | C | 42.5 | D2 | 30.0 | white |
| 18 | first | 12 | A1 | 54.0 | B2 | 23.5 | C | 22.5 | D3 | 8.0 | silver |
| | second | 48 | A1 | 54.0 | B2 | 23.5 | C | 22.5 | D1 | 7.5 | black |
| 19 | first | 12 | A1 | 56.0 | B1 | 17.0 | C | 27.0 | D3 | 8.0 | silver |
| | second | 48 | A1 | 56.0 | B1 | 17.0 | C | 27.0 | D1 | 7.5 | black |
| 20 | first | 10 | A1 | 58.7 | B2 | 18.3 | C | 23.0 | D2 | 80.0 | white |
| | second | 50 | A1 | 58.7 | B2 | 18.3 | C | 23.0 | D1 | 7.5 | black |
| 21 | first | 11 | A1 | 58.7 | B2 | 18.3 | C | 23.0 | D1 | 17.0 | black |
| | second | 51 | A1 | 58.7 | B2 | 18.3 | C | 23.0 | D4 | 6.0 | red |
| | | | | | | | | | D2 | 7.5 | white |
| 22 | first | 13 | A1 | 58.7 | B2 | 18.3 | C | 23.0 | D5 | 6.0 | yellow |
| | | | | | | | | | D2 | 7.5 | white |
| | second | 49 | A1 | 58.7 | B2 | 18.3 | C | 23.0 | D1 | 7.5 | black |
| 23 | first | 12 | A1 | 58.7 | B2 | 18.3 | C | 23.0 | D6 | 4.0 | blue |
| | second | 48 | A1 | 58.7 | B2 | 18.3 | C | 23.0 | D2 | 30.0 | white |
| 24 | first | 12 | A1 | 58.7 | B2 | 18.3 | C | 23.0 | D2 | 80.0 | white |
| | second | 50 | A1 | 58.7 | B2 | 18.3 | C | 23.0 | D6 | 2.0 | blue |
| 25 | first | 12 | A1 | 31.0 | B3 | 34.0 | C | 35.0 | D1 | 17.0 | black |
| | second | 60 | A1 | 31.0 | B3 | 34.0 | C | 35.0 | D2 | 30.0 | white |

### Examples 26 and 27

### Multilayer sheet material

Multilayer films were prepared by screen-printing a first thin layer, followed by drying and partial curing, and then screen-printing a second thin layer, followed again by drying and partial curing, and finally casting a third thicker layer with a knife-coater, followed by drying and complete curing of the multilayer film. Compositions of the multilayer films are shown in table 5. Each layer was rendered recognizably different from other layers by the presence or absence of various coloring pigments.

**TABLE 5**

| Ex. No. | Layer | Thickness | A-Type | wt.% | B-Type | wt.% | C. | wt.% | D-Type | phr | color |
|---|---|---|---|---|---|---|---|---|---|---|---|
| 26 | first | 12 | A1 | 58.7 | B2 | 18.3 | C | 23.0 | D2 | 80.0 | white |
| | second | 10 | A1 | 58.7 | B2 | 18.3 | C | 23.0 | D1 | 17.0 | black |
| | third | 50 | A1 | 58.7 | B2 | 18.3 | C | 23.0 | D4 | 5.0 | red |
| | | | | | | | | | D2 | 7.5 | white |
| 27 | first | 10 | A1 | 58.7 | B2 | 18.3 | C | 23.0 | D4 | 7.5 | red |
| | | | | | | | | | D2 | 7.5 | white |
| | second | 10 | A1 | 58.7 | B2 | 18.3 | C | 23.0 | D6 | 3.0 | blue |
| | third | 49 | A1 | 58.7 | B2 | 18.3 | C | 23.0 | D2 | 7.5 | white |

The levelling agent (component E) was present only in the third layer in an amount of 0.08 phr.

The thickener (component F) was present in first and second layer in an amount of 1.5 phr.

The catalyst (component G) was present in each layer in an amount of 0.2 phr.

### Preparation of the label stock

The single-layer or multilayer polyurethane films prepared above were corona treated to improve anchorage of the pressure-sensitive adhesive to the film.

An organic solution of an acrylate pressure-sensitive adhesive was prepared by polymerizing a mixture of isooctyl acrylate and acrylic acid in a ratio of 94 to 6 by weight in organic solvent using azobisisobutyronitrile thermal initiator. The resulting adhesive was coated onto a siliconized paper and dried to a final thickness of 25 µm, thus forming a transferable adhesive layer.

The transferable adhesive layer was laminated to one side of the single layer film or to the thicker second layer of the bilayer film, or to the third thicker layer of the multilayer film, thus forming a label stock.

### Mechanical properties and durability of the sheet materials and multilayer sheet materials

The mechanical properties, tensile strength at break, elongation at break and secant modulus were determined in accordance with (the German standard of), DIN 53455.

Preparation of test samples for Heat Resistance, Chemical Resistance and Weathering Resistance Tests:
100 mm x 25 mm samples of label stock were adhered to aluminum panels by rolling over the label twice with a 2 kg rubber-coated roller. The samples were aged 24 hours at room temperature before testing.

The chemical resistance, abrasion resistance, weathering resistance and heat-resistance of the test samples were determined as follows:

### Heat resistance

The samples of 100 mm x 25 mm in size in the adhered conditions were exposed to heat at a temperature of 200°C for a period of one hour in a forced-air oven. Each sample was evaluated with respect to shrinkage, adhesion and color changes. The evaluation symbols given in Table 6 have the following meanings:
- ○ =: acceptable;
- + =: good;
- ++ =: very good.

### Chemical resistance

The resistance to chemicals was tested by immersing the samples into the respective test liquids for a period of 10 seconds, followed by drying for 20 seconds; this procedure was repeated five times.

Tested was the resistance of the recording material to toluene, gasoline, ethanol, trichloroethane and methyl ethyl ketone. Furthermore, the behavior of the material in dilute alkali and dilute acid solutions was examined. The evaluation symbols have the following meanings:
- ○ =: acceptable;
- + =: good;
- ++ =: very good.

The heat resistance and solvent resistance of the recording material may be improved by the addition of inorganic fillers, which, however, is at the expense of the resilience property.

### Weathering resistance

The weathering property was tested by means of quick-weathering apparatus QUV of the Company Q-Panel (Cleveland, Ohio, USA). The daily cycle included 15 hours of UV irradiation and 9 hours of moist condensation at 40°C. The evaluation after a total of 1,500 hours of testing (altogether) was based on the following standard:
- ○ =: acceptable (slight yellowish discoloration);
- + =: good (for example, a matt surface);
- ++ =: very good (no change).

### Abrasion resistance

The abrasion was tested by a method similar to that of DIN 53754. In DIN 53754 the samples are evaluated by weighing to determine the amount of material lost by abrasion. Test results provided below were determined by visual inspection of the abraded surface. The abrasion from the first layer was visually evaluated by the following standard:
- + =: good (distinctly visible tracks on the surface);
- ++ =: very good (some matt tracks on the surface).

### Heat shrinkage

A sample of 5 x 10 cm was applied on aluminum panel using a 2 kg rubber-coated roller as described above and cut with a razor blade, two lines in a distance of 5 cm cross direction and 3 cm between the cross lines in length direction. The sample was heat stressed at 130°C for 15 minutes. The shrinkage was measured by microscope and crackforming was determined visually.
- ○ =: slight cracks, shrinkage ≤ 1,0%
- + =: no cracks, shrinkage ≤ 0,5%
- ++ =: no cracks, shrinkage ≤ 0,1%

**TABLE 6**

| Mechanical properties and durability of the sheet material | | | | | | | | |
|---|---|---|---|---|---|---|---|---|
| Ex. No. | Tensile strength N/mm² | Elongation at break % | Secant modulus N/mm² | Rating | | | | |
| | | | | Resistance | | | | Heat shrinkage |
| | | | | Chem. | Abrasion | Weather | Heat | |
| 1 | 47.6 | 3.9 | 1400 | ++ | + | ++ | ++ | ++ |
| 2 | 45.0 | 3.0 | 2000 | ++ | + | ++ | ++ | ++ |
| 3 | 18.7 | 51.0 | 250 | O | ++ | ++ | + | ++ |
| 4 | 18.0 | 110.0 | 200 | O | ++ | ++ | + | ++ |
| 5 | 18.4 | 69.3 | 328 | O | ++ | ++ | + | ++ |
| 6 | 14.1 | 65.5 | 160 | O | ++ | ++ | + | ++ |
| 7 | 34.95 | 6.8 | 850 | + | ++ | + | + | O |
| 8 | 28.3 | 5.0 | 680 | + | ++ | O | + | O |
| 9 | 21.0 | 8.6 | 400 | O | ++ | + | ++ | O |
| 10 | 23.0 | 9.0 | 420 | O | ++ | ++ | ++ | O |
| 11 | 41.0 | 4.4 | 980 | ++ | + | + | ++ | + |
| 12 | 40.0 | 5.0 | 950 | ++ | + | + | ++ | + |
| 13 | 39.0 | 11.2 | 840 | + | + | + | + | O |
| 14 | 12.0 | 76.0 | 40 | O | ++ | O | O | + |
| 15 | 18.0 | 17.0 | 1800 | + | + | + | + | O |
| 16 | 34.0 | 35.0 | 3100 | ++ | ++ | ++ | ++ | ++ |
| 17 | 29.0 | 5.5 | 700 | + | ++ | + | + | O |
| 18 | 22.0 | 42.0 | 1800 | + | ++ | ++ | + | ++ |
| 19 | 38.0 | 5.5 | 3300 | ++ | ++ | ++ | ++ | ++ |
| 20 | 26.0 | 23.0 | 2300 | + | + | ++ | ++ | ++ |
| 21 | 28.0 | 25.0 | 2500 | ++ | ++ | ++ | ++ | ++ |
| 22 | 27.0 | 24.0 | 2300 | ++ | ++ | + | + | ++ |
| 23 | 30.0 | 18.0 | 3000 | ++ | ++ | ++ | ++ | ++ |
| 24 | 27.5 | 20.0 | 2200 | ++ | ++ | ++ | ++ | ++ |
| 25 | 40.0 | 10.0 | 400 | + | + | ++ | ++ | + |
| 26 | 31.0 | 17.0 | 2800 | ++ | ++ | ++ | ++ | ++ |
| 27 | 30.0 | 19.0 | 2500 | ++ | ++ | ++ | ++ | ++ |

## Claims

1. A halogen-free acrylic urethane sheet material (10) comprising a polymer comprising components A, B and C wherein
component A comprises a copolymer of
(i) a monoester of acrylic or methacrylic acid and an aliphatic diol having 2 to 8 carbon atoms and
(ii) an ester of acrylic or methacrylic acid and an aliphatic alcohol having 1 to 8 carbon atoms except monoesters (i), and optionally a vinyl aromatic monomer as well as optionally N-vinylpyrrolidone or N-vinylcaprolactame,
said component A having a T_{g} of 30°C to 100°C,
component B comprising an aliphatic polyester diol with an weight-average molecular weight less than 20,000 and
component C comprising a polyfunctional isocyanate or blocked polyfunctional isocyanate.

2. The halogen-free acrylic urethane sheet material of claim 1 wherein the aliphatic diol of subcomponent (i)has 2 to 4 carbon atoms and the aliphatic alcohol of sub-component (ii) has 1 to 4 carbon atoms.

3. The halogen-free acrylic urethane sheet material of claim 1 and/or 2 wherein the ester of acrylic acid or methacrylic acid and an aliphatic alcohol having to 8 carbon atoms is substituted by styrene derivatives, N-vinylpyrrolidone or N-vinylcaprolactame or combinations thereof up to 70 % by weight.

4. The halogen-free acrylic urethane sheet material of any one of the claims 1 to 3 wherein additionally are present coloring agents, thickeners and/or levelling agents.

5. The halogen-free acrylic urethane sheet material of any one of the claims 1 to 4 wherein component A is present in amounts of from 15 to 80 percent by weight based on total amount of components A, B and C,
component B is present in amounts of from 5 to 50% by weight based on total amount of components A, B and C,
component C is present in amounts of from 15 to 50% by weight based on total amount of components A, B and C.

6. The halogen-free acrylic urethane sheet material of claim 5 wherein component A is present in amounts of from 30 to 60% by weight based on total amount of components A, B and C,
component B is present in amounts of from 15 to 30% by weight based on total amount of components A, B and C,
and component C is present in amounts of from 20 to 45% by weight based on total amount of components A, B and C.

7. The halogen-free acrylic urethane sheet material of any one of the claims 1 to 6 wherein component B is a poly-epsilon-caprolactone-diol with a weight-average molecular weight of 500 to 10,000.

8. The halogen-free acrylic urethane sheet material of any of the claims 1 to 7 wherein component C is an adduct of 1,6-hexamethylene diisocyanate and 2-butanone oxime or a dimer of the polyfunctional isocyanate.

9. The halogen-free acrylic urethane sheet material of any one of claims 1 to 8 which is markable by conventional printing methods and/or by radiation methods.

10. The halogen-free acrylic urethane sheet material of any one of claims 1 to 9 wherein the sheet material is laser-markable.

11. A multilayer halogen-free acrylic urethane sheet material having at least one layer provided with coloring agents each layer comprising a polymer composition of components A, B and C as defined in any one of the claims 1 to 8.

12. The multilayer halogen-free acrylic urethane sheet material of claim 11 which is markable by conventional printing methods and/or by radiation methods.

13. The multilayer halogen-free acrylic urethane sheet material according to claims 11 and/or 12 wherein the multilayer sheet material is laser-markable.

14. A label stock comprising a single layer or multilayer halogen-free acrylic urethane sheet material according to any one of the claims 1 to 13 provided with a heat activatable adhesive or a pressure sensitive adhesive.

15. The label stock according to claim 14 having a protective sheet on its exposed adhesive surface.

16. Process for preparing a halogen-free acrylic urethane sheet material according to claim 1
by copolymerizing the subcomponents (i) and (ii) of component A as defined in claim 1 in solution
mixing the component A in solution with components B and C as defined in claim 1,
optionally adding the components of claim 4,
casting the mixture on a removable support followed by thermal curing and priming one or both surfaces.

17. A process for preparing the multilayer sheet material of claim 11 wherein the individual layers are produced as films by coating or printing or by mono- or multilayer casting or by laminating prefabricated sheet materials of claim 1 or combinations of the process measures and priming the printable surface with corona discharge treatment if the sheet material is prepared for use in conventional printing methods.

18. A process for preparing a label stock according to the method of claim 17 followed by arranging a layer of a pressure sensitive adhesive or heat-activatable adhesive on one side of the sheet material.

19. A process of claim 18 wherein the side on which the pressure-sensitive or heat activatable adhesive is arranged said side has been primed by chemical or physical methods.

20. A process for producing the multilayer sheet material of claim 11 by spray-coating and/or screen-print coating of a removable support with a thin reactive layer of a composition comprising the components A, B and C as defined in any one of claims 1 to 8,
followed by drying for a short time to partially cure the first layer (1) of said mixture,
coating onto the first layer (1) a second layer (2) of a mixture having a different color than the first layer,
optionally repeating the previous step for producing a third layer (3),
drying the layers to finally cure them,
removing the multilayer sheet material from the support,
providing one side of the multilayer sheet with a pressure-sensitive adhesive material onto a side which has been treated with a primer
and applying a protective sheet (5) onto the pressure-sensitive adhesive layer (4).

21. A process according to any one of the Claims 16 to 20 wherein the removable support has a rough surface structure for providing a matte surface structure of the first layer (1).

22. A method of using a composition comprising components A, B and C as defined in any one of the claims 1 to 8 for producing the halogen-free acrylic urethane sheet material of claim 1.

23. A method of using a composition comprising components A, B and C as defined in any one of the claims 1 to 8 for producing a multilayer sheet material of claim 11.

24. A method of using a composition comprising components A, B and C as defined in any one of claims 1 to 8 for preparing a label stock according to claims 14 and/or 15.

25. A method of using a composition comprising components A, B and C as defined in any one of the claims 1 to 8 for producing a markable halogen-free acrylic urethane sheet material according to claims 1, 11 and 14.

## Patentansprüche

1. Halogenfreies Acrylurethan-Folienmaterial (10), umfassend ein Polymer mit den Komponenten A, B und C, wobei
die Komponente A
(i) ein Copolymer von einem Monoester von Acryl- oder Methacrylsäure und ein aliphatisches Diol mit 2 bis 8 Kohlenstoffatomen umfaßt, und
(ii) ein Copolymer von einem Ester von Acryl- oder Methacrylsäure und einen aliphatischen Alkohol mit 1 bis 8 Kohlenstoffatomen mit Ausnahme der Monoester (i) und wahlweise ein aromatisches Vinylmonomer sowie wahlweise N-Vinylpyrrolidon oder N-Vinylcaprolactam umfaßt,
wobei die Komponente A einen Glasübergangspunkt T_{g} von 30°C bis 100°C besitzt,
die Komponente B ein aliphatisches Polyesterdiol mit einem durchschnittlichen Molekulargewicht von weniger als 20.000 umfaßt, und
die Komponente C ein polyfunktionelles Isocyanat oder ein blockiertes polyfunktionelles Isocyanat umfaßt.

2. Halogenfreies Acrylurethan-Folienmaterial nach Anspruch 1, bei dem das aliphatische Diol der Unterkomponente (i) 2 bis 4 Kohlenstoffatome und der aliphatische Alkohol der Unterkomponente (ii) 1 bis 4 Kohlenstoffatome besitzt.

3. Halogenfreies Acrylurethan-Folienmaterial nach Anspruch 1 und/oder 2, bei dem der Ester von Acrylsäure oder Methacrylsäure und ein aliphatischer Alkohol mit 1 bis 8 Kohlenstoffatomen durch Styrolderivate, N-Vinylpyrrolidon oder N-Vinylcaprolactam oder Kombinationen derselben mit bis zu 70 Gew.-% substituiert ist.

4. Halogenfreies Acrylurethan-Folienmaterial nach einem der Ansprüche 1 bis 3, bei dem zusätzlich Farbmittel, Verdikkungsmittel und/oder Egalisierungsmittel vorhanden sind.

5. Halogenfreies Acrylurethan-Folienmaterial nach einem der Ansprüche 1 bis 4, bei dem die Komponente A in Mengen von 15 bis 80 Gew.-% bezogen auf die Gesamtmenge der Komponenten A, B und C vorhanden ist,
die Komponente B in Mengen von 5 bis 50 Gew.-% bezogen auf die Gesamtmenge der Komponenten A, B und C vorhanden ist, und
die Komponente C in Mengen von 15 bis 50 Gew.-% bezogen auf die Gesamtmenge der Komponenten A, B und C vorhanden ist.

6. Halogenfreies Acrylurethan-Folienmaterial nach Anspruch 5, bei dem die Komponente A in Mengen von 30 bis 60 Gew.-% bezogen auf die Gesamtmenge der Komponenten A, B und C vorhanden ist,
die Komponente B in Mengen von 15 bis 30 Gew.-% bezogen auf die Gesamtmenge der Komponenten A, B und C vorhanden ist, und
die Komponente C in Mengen von 20 bis 45 Gew.-% bezogen auf die Gesamtmenge der Komponenten A, B und C vorhanden ist.

7. Halogenfreies Acrylurethan-Folienmaterial nach einem der Ansprüche 1 bis 6, bei dem die Komponente B ein Poly-Y-caprolactondiol mit einem durchschnittlichen Molekulargewicht von 500 bis 10.000 ist.

8. Halogenfreies Acrylurethan-Folienmaterial nach einem der Ansprüche 1-7, bei dem die Komponente C ein Anlagerungsprodukt von 1,6-Hexamethylendiisocyanat und 2-Butanonoxim oder ein Dimer des polyfunktionellen Isocyanats ist.

9. Halogenfreies Acrylurethan-Folienmaterial nach einem der Ansprüche 1 bis 8, das mit herkömmlichen Druckverfahren und/oder Bestrahlungsverfahren beschriftet werden kann.

10. Halogenfreies Acrylurethan-Folienmaterial nach einem der Ansprüche 1 bis 9, bei dem das Folienmaterial mittels Laser beschriftet werden kann.

11. Mehrlagiges halogenfreies Acrylurethan-Folienmaterial, bei dem wenigstens eine Lage mit Farbmitteln versehen ist, wobei jede Lage eine Polymerzusammensetzung der Komponenten A, B und C nach einem der Ansprüche 1 bis 8 enthält.

12. Mehrlagiges halogenfreies Acrylurethan-Folienmaterial nach Anspruch 11, das mit herkömmlichen Druckverfahren und/oder Bestrahlungsverfahren beschriftet werden kann.

13. Mehrlagiges halogenfreies Acrylurethan-Folienmaterial nach Anspruch 11 und/oder 12, bei dem das mehrlagige Folienmaterial mit Laser beschriftet werden kann.

14. Etikettenmaterial umfassend ein einlagiges oder mehrlagiges halogenfreies Acrylurethan-Folienmaterial nach einem der Ansprüche 1 bis 13, das mit einem wärmeaktivierbaren Kleber oder einem Haftkleber versehen ist.

15. Etikettenmaterial nach Anspruch 14 mit einer Schutzfolie auf seiner freiliegenden Klebeseite.

16. Verfahren zur Herstellung eines halogenfreien Acrylurethan-Folienmaterials nach Anspruch 1, umfassend die folgenden Schritte:
Copolymerisieren der Unterkomponenten (i) und (ii) der in Lösung befindlichen Komponente A nach Anspruch 1,
Mischen der in Lösung befindlichen Komponente A mit den Komponenten B und C nach Anspruch 1,
wahlweise Zugabe der Komponenten von Anspruch 4,
Gießen der Mischung auf einen abnehmbaren Träger und anschließende Aushärtung mittels Wärme und Grundierung einer oder beider Seiten.

17. Verfahren zur Herstellung des mehrlagigen Folienmaterials nach Anspruch 11, bei dem die einzelnen Schichten als Filme hergestellt werden durch Auftragen oder Drucken oder ein- oder mehrlagiges Gießen oder Kaschieren vorgefertigter Folienmaterialien nach Anspruch 1 oder durch Kombinationen der Verfahren und Grundieren der bedruckbaren Flächen mit einer Koronaentladung, wenn das Folienmaterial zur Verwendung bei herkömmlichen Druckverfahren hergestellt wird.

18. Verfahren zur Herstellung eines Etikettenmaterials nach dem Verfahren von Anspruch 17 und anschließenden Anordnung einer Schicht eines Haftklebers oder wärmeaktivierbaren Klebers auf einer Seite des Folienmaterials.

19. Verfahren nach Anspruch 18, bei dem die Seite, auf die der Haftkleber oder wärmeaktivierbare Kleber aufgebracht wurde, durch chemische oder physikalische Verfahren grundiert wurde.

20. Verfahren zur Herstellung des mehrlagigen Folienmaterials nach Anspruch 11, indem ein abnehmbarer Träger mit einer dünnen reaktionsfähigen Schicht einer Zusammensetzung mit den Komponenten A, B und C nach einem der Ansprüche 1 bis 8 aufgesprüht oder mittels Siebdruck aufgebracht wird,
anschließend kurz getrocknet wird, um die erste Schicht (1) der Mischung teilweise auszuhärten,
auf die erste Schicht (1) eine zweite Schicht (2) aus einer Mischung mit einer anderen Farbe als die erste Schicht aufgetragen wird,
der vorhergehende Schritt wahlweise wiederholt wird, um eine dritte Schicht (3) zu erzeugen,
die Schichten getrocknet werden, damit sie schließlich aushärten,
das mehrlagige Folienmaterial von dem Träger abgezogen wird,
eine Seite der mehrlagigen Folie mit einem Haftkleber versehen wird, und zwar die Seite, die mit einer Grundierung behandelt wurde,
und eine Schutzfolie (5) auf die Haftkleberschicht (4) aufgebracht wird.

21. Verfahren nach einem der Ansprüche 16 bis 20, bei dem der abnehmbare Träger eine rauhe Oberflächenstruktur besitzt, um der ersten Schicht (1) eine matte Oberflächenstruktur zu verleihen.

22. Verfahren zur Verwendung einer Zusammensetzung, welche die Komponenten A, B und C nach einem der Ansprüche 1 bis 8 enthält, zur Herstellung des halogenfreien Acrylurethan-Folienmaterials nach Anspruch 1.

23. Verfahren zur Verwendung einer Zusammensetzung, welche die Komponenten A, B und C nach einem der Ansprüche 1 bis 8 enthält, zur Herstellung eines mehrlagigen Folienmaterials nach Anspruch 11.

24. Verfahren zur Verwendung einer Zusammensetzung, welche die Komponenten A, B und C nach einem der Ansprüche 1 bis 8 enthält, zur Herstellung eines Etikettenmaterials nach Anspruch 14 und/oder 15.

25. Verfahren zur Verwendung einer Zusammensetzung, welche die Komponenten A, B und C nach einem der Ansprüche 1 bis 8 enthält, zur Herstellung eines beschriftbaren halogenfreien Acrylurethan-Folienmaterials nach Anspruch 1, 11 und 14.

## Revendications

1. Matériau en feuille d'uréthane acrylique dépourvu d'halogène (10) comprenant un polymère comportant les composants A, B et C où
le composant A comprend un copolymère de
(i) un monoester de l'acide acrylique ou méthacrylique et d'un diol aliphatique ayant de 2 à 8 atomes de carbone, et
(ii) un ester de l'acide acrylique ou méthacrylique et d'un alcool aliphatique ayant de 1 à 8 atomes de carbone qui est différent des monoesters (i), et éventuellement un monomère vinyle aromatique ainsi que éventuellement la N-vinylpyrrolidone ou le N-vinylcaprolactame,
ledit composant A ayant une Tg de 30°C à 100°C,
le composant B comprend un polyesterdiol aliphatique ayant un poids moléculaire moyen en poids inférieur à 20 000 et
le composant C comprend un isocyanate polyfonctionnel ou un isocyanate polyfonctionnel bloqué.

2. Matériau en feuille d'uréthane acrylique dépourvu d'halogène suivant la revendication 1, dans lequel le diol aliphatique du sous-composant (i) a de 2 à 4 atomes de carbone, et l'alcool aliphatique du sous-composant (ii) a de 1 à 4 atomes de carbone.

3. Matériau en feuille d'uréthane acrylique dépourvu d'halogène suivant la revendication 1 ou 2, dans lequel l'ester de l'acide acrylique ou méthacrylique et de l'alcool aliphatique ayant de 1 à 8 atomes de carbone est substitué par des dérivés de styrène, la N-vinylpyrrolidone, le N-vinylcaprolactame ou leurs combinaisons jusqu'à 70 % en poids.

4. Matériau en feuille d'uréthane acrylique dépourvu d'halogène suivant l'une quelconque des revendications 1 à 3, dans lequel sont en outre présents des agents de coloration, des épaississants et/ou des agents nivelants.

5. Matériau en feuille d'uréthane acrylique dépourvu d'halogène suivant l'une quelconque des revendications 1 à 4, dans lequel le composant A est présent en quantités de 15 à 80 % en poids par rapport à la quantité totale des composants A, B et C,
le composant B est présent en quantités de 5 à 50 % en poids par rapport à la quantité totale des composants A, B et C,
le composant C est présent en quantités de 15 à 50 % en poids par rapport à la quantité totale des composants A, B et C.

6. Matériau en feuille d'uréthane acrylique dépourvu d'halogène suivant la revendication 5, dans lequel le composant A est présent en quantités de 30 à 60 % en poids par rapport à la quantité totale des composants A, B et C,
le composant B est présent en quantités de 15 à 30 % en poids par rapport à la quantité totale des composants A, B et C,
le composant C est présent en quantités de 20 à 45 % en poids par rapport à la quantité totale des composants A, B et C.

7. Matériau en feuille d'uréthane acrylique dépourvu d'halogène suivant l'une quelconque des revendications 1 à 6, dans lequel le composant B est un poly-ε-caprolactame-diol ayant un poids moléculaire moyen en poids de 500 à 10 000.

8. Matériau en feuille d'uréthane acrylique dépourvu d'halogène suivant l'une quelconque des revendications 1 à 7, dans lequel le composant C est un produit de condensation de 1,6-hexaméthylènediisocyanate et de 2-butanone-oxime ou un dimère de l'isocyanate polyfonctionnel.

9. Matériau en feuille d'uréthane acrylique dépourvu d'halogène suivant l'une quelconque des revendications 1 à 8, qui est marquable par des méthodes conventionnelles d'impression et/ou des méthodes d'irradiation.

10. Matériau en feuille d'uréthane acrylique dépourvu d'halogène suivant l'une quelconque des revendications 1 à 9, dans lequel ledit matériau en feuille est marquable au laser.

11. Matériau en feuille d'uréthane acrylique dépourvu d'halogène multicouche ayant au moins une couche munie d'agents de coloration, chaque couche comprenant une composition polymère des composants A, B et C tels que définis dans l'une quelconque des revendications 1 à 8.

12. Matériau en feuille d'uréthane acrylique dépourvu d'halogène multicouche suivant la revendication 11, qui est marquable par des méthodes conventionnelles d'impression et/ou des méthodes d'irradiation.

13. Matériau en feuille d'uréthane acrylique dépourvu d'halogène multicouche suivant la revendication 11 ou 12, dans lequel ledit matériau en feuille multicouche est marquable au laser.

14. Ensemble d'étiquette comprenant un matériau en feuille d'uréthane acrylique dépourvu d'halogène monocouche ou multicouche suivant l'une quelconque des revendications 1 à 13, pourvu d'un adhésif thermoactivable ou sensible à la pression.

15. Ensemble d'étiquette suivant la revendication 14, ayant une feuille de protection sur sa surface adhésive exposée.

16. Procédé pour la préparation d'un matériau en feuille d'uréthane acrylique dépourvu d'halogène suivant la revendication 1, par
copolymérisation en solution des sous-composants (i) et (ii) du composant A tels que définis dans la revendication 1,
mélange du composant A en solution avec les composants B et C tels que définis dans la revendication 1,
addition, le cas échéant, des composants suivant la revendication 5,
coulée du mélange sur un support séparable suivie d'un durcissement thermique et d'un amorçage sur une ou deux faces.

17. Procédé pour préparer le matériau en feuille multicouche de la revendication 11, dans lequel les couches individuelles sont produites sous forme de pellicules par revêtement ou impression ou par coulée d'une ou plusieurs couches ou par la formation d'un stratifié de matériaux en feuille de la revendication 1 préfabriqués ou combinaisons de ces méthodes et amorçage de la surface imprimable au moyen d'un traitement par décharge en couronne si le matériau en feuille est préparé pour utilisation dans des techniques conventionnelles d'impression.

18. Procédé pour préparer un ensemble d'étiquette suivant le procédé de la revendication 17, puis disposition d'une couche d'adhésif sensible à la pression ou thermoactivable sur une face du matériau en feuille.

19. Procédé suivant la revendication 18, dans lequel la face sur laquelle est déposé l'adhésif sensible à la pression ou thermoactivable a été pourvue d'un primaire d'amorçage selon des méthodes chimiques ou physiques.

20. Procédé pour la production du matériau en feuille multicouche de la revendication 11, par pulvérisation-revêtement et/ou sérigraphie-revêtement d'un support séparable, au moyen d'une fine couche réactive d'une composition comprenant les composants A, B et C suivant l'une quelconque des revendications 1 à 8, ledit revêtement étant suivie des étapes consistant à
sécher pendant une courte durée de temps pour durcir partiellement la première couche (1) dudit mélange,
revêtir ladite première couche (1) avec une seconde couche (2) d'un mélange ayant une couleur différente de la première couche,
le cas échéant, répéter les étapes précédentes pour apporter une troisième couche (3),
sécher les couches pour les durcir,
séparer le matériau en feuille multicouche du support,
pourvoir la feuille multicouche d'un matériau adhésif sensible à la pression sur la face qui a été traitée avec un primaire d'amorçage,
appliquer une feuille de protection (5) sur la couche d'adhésif (4) sensible à la pression.

21. Procédé suivant l'une quelconque des revendications 16 à 20, dans lequel le support séparable a une structure de surface rugueuse pour fournir une structure de surface matte à la première couche (1).

22. Procédé d'utilisation d'une composition comprenant les composants A, B et C tels que définis dans l'une quelconque des revendications 1 à 8, pour produire le matériau en feuille d'uréthane acrylique dépourvu d'halogène selon la revendication 1.

23. Procédé d'utilisation d'une composition comprenant les composants A, B et C tels que définis dans l'une quelconque des revendications 1 à 8, pour produire un matériau en feuille multicouche selon la revendication 11.

24. Procédé d'utilisation d'une composition comprenant les composants A, B et C tels que définis dans l'une quelconque des revendications 1 à 8, pour produire un ensemble d'étiquette selon les revendications 14 et/ou 15.

25. Procédé d'utilisation d'une composition comprenant les composants A, B et C tels que définis dans l'une quelconque des revendications 1 à 8, pour produire un matériau en feuille d'uréthane acrylique dépourvu d'halogène marquable selon les revendications 1, 11 et 14.
